# EUROPÄISCHE PATENTSCHRIFT

(11) **EP 0 642 199 B1**
(45) Veröffentlichungstag und Bekanntmachung des Hinweises auf die Patenterteilung: **15.04.1998**
(21) Anmeldenummer: 94112873.8
(22) Anmeldetag: 18.08.1994
(51) Int. Cl.: H02H 7/12, H02H 9/02

(54) **Schutzschaltung für einen Stromkreis mit einer Kondensatorschaltung**
Protection circuit for a circuit with capacitors
Circuit de protection pour un circuit avec des condensateurs

(30) Priorität: 08.09.1993 DE 4330381
(43) Veröffentlichungstag der Anmeldung: 08.03.1995
(73) Patentinhaber: ASEA BROWN BOVERI AG, 5400 Baden (CH)
(72) Erfinder: Baiatu, Tudor, Dr., CH-5200 Brugg (CH); Ketteler, Karl-Hermann, Dr., CH-5312 Döttingen (CH)

(56) Entgegenhaltungen:
- EP-A- 0 548 606
- FR-A- 2 206 610
- US-A- 3 930 193
- US-A- 4 583 146

## Beschreibung

### TECHNISCHES GEBIET

Bei der Erfindung wird ausgegangen von einer Schutzschaltung für einen Stromkreis mit einer Kondensatorschaltung nach dem Oberbegriff des Patentanspruchs 1.

### STAND DER TECHNIK

Mit dem Oberbegriff des Patentanspruchs 1 nimmt die Erfindung auf einen Stand der Technik Bezug, wie er aus der US-A 3,930,193 bekannt ist. Dort ist eine Umrichterschaltung mit einem Gleichstromzwischenkreis zwischen einem Gleich- und Wechselrichter angegeben, bei dem ein temperaturabhängiger Widerstand im Hauptstrompfad des Gleichstromzwischenkreises angeordnet und mit einem Kondensator in Reihe geschaltet ist.

Wird ein Kaltleiter als strombegrenzendes Schutzelement in einem für große Betriebsströme und große Betriebsspannungen ausgelegten elektrischen Netzwerk eingesetzt, so wird beim Auftreten eines Kurzschlusses während des Abschaltvorganges im Kaltleiter beträchtliche Energie umgesetzt. Dies kann insbesondere dann, wenn der Schaltvorgang im Kaltleiter inhomogen erfolgt, dazu führen, daß der Kaltleiter lokal überhitzte Bereiche bildet. In den überhitzten Bereichen schaltet der Kaltleiter früher in den hochohmigen Zustand als an nichterhitzten Stellen. Es fällt dann die gesamte am Kaltleiter anliegende Spannung über eine relativ kleine Distanz am Ort des höchsten Widerstandes ab, so daß die damit verbundene hohe elektrische Feldstärke zu Durchschlägen und zur Beschädigung des Kaltleiters führen kann.

Aus der DE 3 710 799 A1 ist ein Störungsdetektor für eine Gleichstromkondensatorschaltung bekannt, wobei in Reihenschaltung zu Kondensatoren eine Schmelzsicherung vorgesehen, die durchschmilzt und den Schaltkreis unterbricht, wenn ein Gleichstromkondensator kurzgeschlossen wird. Es vergeht eine Zeitspanne von einigen 100 ms ab dem Zeitpunkt des Kurzschlusses der Leitungen der Wechselrichterschaltung, bevor ein Detektor für das Durchschmelzen der Sicherung verzögert diesen Kurzschluß wahrnimmt. Wahrgenommen wird nur ein interner Kurzschluß eines Gleichstromkondensators. Bei einem internen Kurzschluß eines Kondensators werden dadurch die zugehörigen Geräte und Schaltungen geschützt. Anstelle der Schmelzsicherung kann auch für Gruppen von in Reihe geschalteten Gleichstromkondensatoren als Störungsdetektor ein Differentialverstärker vorgesehen sein, der eine Störung anhand einer Potentialdifferenz detektiert.

Für Traktionsstromrichter, die erhöhten Vibrations- und Stoßbeanspruchungen ausgesetzt sind, ist der Einsatz herkömmlicher Schmelzsicherungen auf Grund ihrer geringen Zuverlässigkeit nicht möglich bzw. von den Bahnbetreibern unerwünscht. Schmelzsicherungen sind große Bauelemente mit viel Verkabelungsaufwand, die hohe Gegenspannungen aufbauen, was für den Betrieb von Stromrichtern mit abschaltbaren Halbleitern störend ist. Geforderte Ansprechempfindlichkeiten von weniger als 100 µs sind schwer, wenn überhaupt, ausführbar.

Durch Gerald Kainz, "Keramische Kaltleiter schützen elektronische Schaltungen", Siemens Components 28 (1990) Heft 1, S. 13 - 16, ist es für die Niederspannungsinstallationstechnik und Hausgerätetechnik bekannt, keramische Kaltleiter anstelle herkömmlicher Schmelzsicherungen z. B. zum Überlastschutz in Reihe zum Verbraucher, zur Schaltverzögerung, als Motorschutz, als Heizelement mit Thermostateigenschaft und für die Meß- und Regeltechnik zu verwenden. Nach Beseitigung der Störung ist ein kurzzeitiges Trennen des Kaltleiters von der Versorgungsspannung notwendig, um dem Kaltleiter Gelegenheit zu geben, hinreichend abzukühlen. Die für diese Schutzfunktionen ausreichenden Schaltverzögerungen bewegen sich im Bereich von einigen Sekunden. Bei Anlagen der Leistungselektronik wird diese Schutzfunktion von einem Anlagenhauptschalter ausgeübt, der im Fall von Überlast oder Kurzschlüssen die Anlage vom Netz trennt.

Aus der US-A-4,583,146 ist es bekannt, parallel zu einem mechanischen Unterbrecherkontakt einen Kaltleiter und einen Varistor zu schalten.

Aus der DE 4 142 523 A1 ist es bekannt, in einem klein dimensionierten rohr- oder plattenförmigen Widerstandskörper hoher Nennstromtragfähigkeit und hoher Spannungsfestigkeit einen Kaltleiter und einen Varistor zu vereinen.

Eine Vergrößerung einer di/dt-Begrenzungsdrossel im Strompfad von Hauptventilen der Stromrichter könnte zwar den Kurzschlußstrom begrenzen, sie hätte jedoch erhöhte Verluste im Dauerbetrieb zur Folge.

### DARSTELLUNG DER ERFINDUNG

Die Erfindung, wie sie im Patentanspruch 1 definiert ist, löst die Aufgabe, eine Schutzschaltung für einen Stromkreis mit einer Kondensatorschaltung der eingangs genannten Art derart weiterzuentwickeln, daß infolge von Störungen auftretende Überströme sicher und schnell begrenzt werden.

Ein Vorteil der Erfindung besteht darin, daß die Schutzeinrichtung reversibel arbeitet, lichtbogenfrei anspricht sowie niederinduktiv und raumsparend einsetzbar ist. Die Schutzschaltung ist verlustarm, rüttelfest und in einen bestehenden Kühlkreislauf integrierbar; sie spricht autonom an und ermöglicht eine flexible Applikation. Die Zuverlässigkeit des Schutzsystems wird durch zusätzliche elektronische Baugruppen und Komponenten nicht beeinträchtigt.

Gemäß einer vorteilhaften Ausgestaltung der Erfindung kann eine Nennstromtragfähigkeit von einigen 100 A bei einer Ansprechzeit von ca. 100 µs und bei einem geringen Bauvolumen des Aktivteils der Schutzschaltung erreicht werden. Dabei ist eine Kühlung des Aktivteils unerläßlich. Diese Kühlung kann bei Hochleistungsstromrichtern mit vorhandener Flüssigkeitskühlung in den Kühlkreislauf integriert werden. Die Gesamtverluste der Schutzschaltung sind für die Verlustbilanz des Stromrichters unbedeutend.

Durch Anpassung der Aktivteilbemessung des Kaltleiters kann das Kurzschlußverhalten der Schutzschaltung den unterschiedlichen elektrischen Kennwerten verschiedener Stromrichtertypen flexibel angepaßt werden. Die konstruktive Gestaltung des Stromrichters wird hierbei nur geringfügig beeinflußt.

Mit dem erfindungsgemäßen Schutz ist es möglich, die intern in einem Stromrichter gespeicherte Energie einer Kondensatorbank von einem Kurzschluß in den Stromrichterschaltern bzw. Halbleitern zu entkoppeln.

Die räumliche Anordnung des Schutzes erfolgt entweder im Gleichspannungszwischenkreis oder in den Phasenbausteinen. Auf Grund der Modularität der Zwischenkreis-Kondensatorbatterie, die ggf. bis zu 40 parallelgeschaltete Kondensatoren aufweist, kann der Kurzschlußschutz wahlweise an einem oder an mehreren parallelgeschalteten Kondensatoren angeordnet werden. Insbesondere ist es möglich, zur Begrenzung von Abschaltüberspannungen, einen oder mehrere der Zwischenkreiskondensatoren ohne Schutzelement auszuführen.

### KURZE BESCHREIBUNG DER ZEICHNUNGEN

Die Erfindung wird nachstehend anhand von Ausführungsbeispielen erläutert. Es zeigen:
- Fig. 1: eine 2Punkt-Stromrichterschaltung mit einem Antriebsstromrichter, der über einen Gleichspannungszwischenkreis mit einem Netzstromrichter verbunden ist, wobei im Kurzschlußpfad von Kondensatoren des Gleichspannungszwischenkreises ein reversibler Kurzschlußstrombegrenzer angeordnet ist,
- Fig. 2: eine Stromrichterschaltung gemäß Fig. 1 mit 3Punkt-Stromrichtern,
- Fig. 3: ein konstruktives Ausführungsbeispiel der Anordnung eines reversiblen Kurzschlußstrombegrenzers an einem Kondensator und
- Fig. 4: eine Schnittansicht zu Fig. 3.

### WEGE ZUR AUSFÜHRUNG DER ERFINDUNG

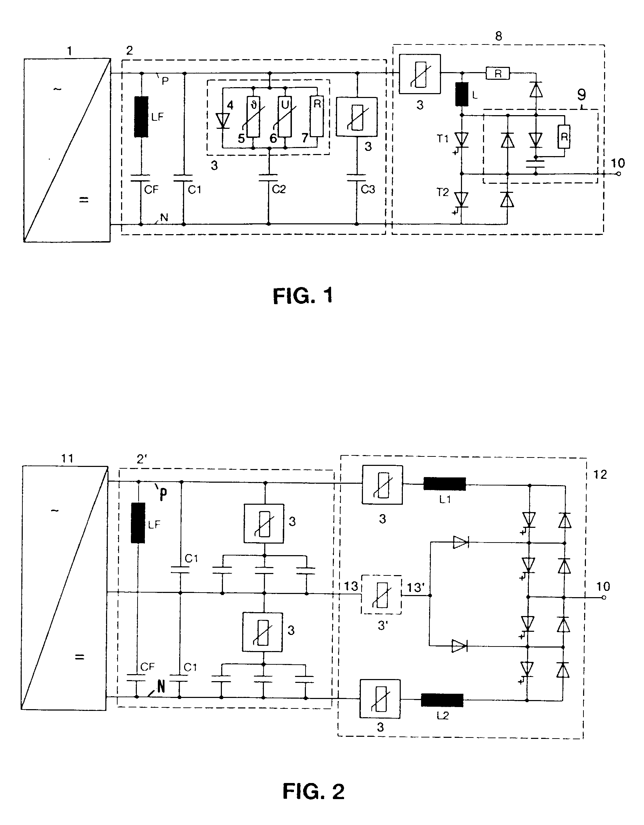

Fig. 1 zeigt einen Netzstromrichter oder 1. Stromrichter (1), der gleichspannungsseitig über einen Gleichspannungszwischenkreis (2) mit einem Antriebsstromrichter bzw. 2. Stromrichter (8) elektrisch verbunden ist.

Der Gleichspannungszwischenkreis (2) weist zwischen einem positiven Pol bzw. einer positiven Polplatte (P) und einem negativen Pol bzw. einer negativen Polplatte (N) ein Filter zur Dämpfung von Zwischenkreisoberschwingungen aus einer Reihenschaltung einer Filterdrossel (LF) und eines Filterkondensators (CF) auf; ferner Zwischenkreiskondensatoren bzw. Kondensatoren (C1, C2, C3), wobei die Kondensatoren (C2, C3) mit je einem reversiblen Kurzschlußstrombegrenzer (3) in Reihe geschaltet sind. Der reversible Kurzschlußstrombegrenzer (3) weist eine Parallelschaltung einer in Sperrichtung eines Kurzschlußpfades gepolten Diode (4), eines Kaltleiters (5), eines Überspannungsableiters bzw. Varistors (6) und eines ohmschen Widerstandes (7) auf. Der Kaltleiter (5) ist im Kurzschlußstrombegrenzer (3) stets vorhanden; Varistor (6), ohmscher Widerstand (7) und Diode (4) können einzeln oder in Kombination zu dem Kaltleiter (5) parallelgeschaltet sein.

Ein Kaltleiter (5) zeigt sog. PTC-Verhalten (PTC = positiver Temperaturkoeffizient).

Vorzugsweise sind Kaltleiter (5) und Varistor (6) zu einem Widerstandskörper vereinigt, wie es aus der eingangs genannten DE 4 142 523 A1 bekannt ist.

Besonders geeignet ist auch ein Widerstandskörper, der einen Kaltleiter (5) mit einem ohmschen Widerstand (7) in einem Bauelement vereinigt. Zur Herstellung eines solchen Widerstandskörpers werden Kaltleiter-Material mit Kaltleiter-Füllstoff und ein 2. Widerstandsmaterial mit Widerstands-Füllstoff in eine Polymermatrix aus Duro- oder Thermoplast eingebettet. Die Füllstoffe haben die Form von Pulver, Fasern und/oder Plättchen. Der Kaltleiter-Füllstoff enthält elektrisch leitende Teilchen von Kohlenstoff und/oder eines Metalles, wie z. B. Nickel, und/oder mindestens eines Borids, Silizids, Oxids und/oder Karbids, wie z. B. TiC₂, TiB₂, MoSi₂, V₂O₃. Der Widerstands-Füllstoff enthält eine dotierte halbleitende Keramik, wie z. B. auf der Basis von ZnO, SnO₂, SrTiO₃, TiO₂, SiC, YBa₂Cu₃O₇₋ₓ, ein Metallgranulat oder einen elektrisch leitend gemachten Kunststoff. Die Größe des Widerstandes aus dem 2. Widerstandsmaterial ist etwa 10mal bis 10⁴mal so groß wie diejenige des Kaltwiderstandes des Kaltleitermaterials.

Die beiden Stromrichter (1, 8) sind als 2Punkt-Stromrichter ausgeführt, wobei für den Stromrichter (8) in Fig. 1 nur zwei Hauptventilzweige mit 2 GTO-Thyristoren (T1, T2) als Hauptventilen für eine Wechselstromphase, die an einer Wechselspannungsklemme (10) abgreifbar ist, gezeigt sind. Für 3phasigen Wechselstrom sind entsprechend 6 gleichartig aufgebaute Hauptventilzweige erforderlich. Parallel zu jedem Hauptventil (T1, T2) ist eine Thyristorbeschaltung (9) vorgesehen, wobei der Übersichtlichkeit halber nur diejenige zum GTO-Thyristor (T1) dargestellt ist. Es versteht sich, daß die Thyristorbeschaltung (9) auch eine andere Schaltung als die dargestellte aufweisen könnte. Im Strompfad der beiden Hauptventile (T1, T2) ist eine Drossel bzw. di/dt-Begrenzungsdrossel (L) über einen reversiblen Kurzschlußstrombegrenzer (3) mit dem positiven Pol (P) des Gleichspannungszwischenkreises (2) verbunden. In einem Parallelzweig zur di/dt-Begrenzungsdrossel (L) ist eine Diode mit einem ohmschen Widerstand in Reihe geschaltet.

Der reversible Kurzschlußstrombegrenzer (3) im 2. Stromrichter (8) kann entfallen, wenn reversible Kurzschlußstrombegrenzer (3) im Gleichspannungszwischenkreis (2) vorgesehen sind. Andererseits können die reversiblen Kurzschlußstrombegrenzer (3) im Gleichspannungszwischenkreis (2) entfallen, wenn ein reversibler Kurzschlußstrombegrenzer (3) im 2. Stromrichter (8) vorgesehen ist.

Fig. 2 zeigt als 2. Ausführungsbeispiel eine der Fig. 1 ähnliche Stromrichterschaltung, die anstelle von 1. und 2. 2Punkt-Stromrichtern (1, 8) 1. und 2. 3Punkt-Stromrichter (11, 12) aufweist. Gleiche Bauelemente sind gleich bezeichnet. In einem Gleichspannungszwischenkreis (2') ist für jede Potentialhälfte ein reversibler Kurzschlußstrombegrenzer (3) in Reihe zu einer Kondensatorbank geschaltet, die mehrere parallelgeschaltete Kondensatoren aufweist. Der Vorteil dieser Beschaltung besteht in einer Kostenreduktion der Schutzbeschaltung, da weniger reversible Kurzschlußstrombegrenzer (3, 3') benötigt werden, bzw. in einer geringeren Systemdiversifizierung, da weniger Typen von reversiblen Kurzschlußstrombegrenzern (3, 3') für das Stromrichtersortiment erforderlich sind.

Bei dem 3Punkt-Stromrichter (12) sind zu den Hauptventilen jedes Hauptventilzweiges di/dt-Begrenzungsdrosseln (L1, L2) in Reihe geschaltet, welche mit dem positiven Pol (P) bzw. mit dem negativen Pol (N) des Gleichspannungszwischenkreises (2') elektrisch verbunden sind. Anstelle dieser beiden reversiblen Kurzschlußstrombegrenzer (3) kann im Nullpunkt- bzw. Mittelpunktpfad des Stromrichters (12) ein gestrichelt dargestellter reversibler Kurzschlußstrombegrenzer (3') vorgesehen sein, welcher einerseits mit einem Mittelpunktleiter (13') dieses Mittelpunktpfades und andererseits mit einem Mittelpunktleiter (13) des Gleichspannungszwischenkreises (2') elektrisch verbunden ist. Dadurch wird für viele Störfälle ein ausreichender Schutz bewirkt. Es versteht sich, daß auch bei diesem Ausführungsbeispiel die reversiblen Kurzschlußstrombegrenzer (3, 3') im 2. Stromrichter (12) entfallen können, wenn reversible Kurzschlußstrombegrenzer (3) im Gleichspannungszwischenkreis (2') den gewünschten Schutz gewährleisten, und umgekehrt.

Wichtig ist, daß im Kurzschlußstrompfad mindestens eines Zwischenkreiskondensators (C2, C3) ein reversibler Kurzschlußstrombegrenzer (3, 3') vorgesehen ist. Dadurch werden etwaige Kurzschlußentladeströme der Kondensatoren (C2, C3) auf Werte begrenzt, die mindestens unterhalb der Zerstörungsgrenze der passiven Komponenten und der Stromschienen liegen, idealerweise unterhalb der Zerstörungsgrenze der aktiven Bauelemente. Die hierfür erforderlichen Reaktionszeiten der Schutzschaltung liegen im Bereich von 100 µs.

Die Schutzschaltungen gemäß den Fig. 1 und 2 gewährleisten sowohl bei einem Teilkurzschluß als auch bei einem Vollkurzschluß eines Stromrichters (1, 8; 11, 12) einen guten Schutz.

Durch die Parallelschaltung einer Diode (4) zu einem Kaltleiter (5) kann die thermische Dauerstrombelastung der reversiblen Kurzschlußstrombegrenzer (3, 3') reduziert werden. Bei Betrieb unter Nennbedingungen leitet die Diode (4) während einer Halbperiode der Zwischenkreis-Pulsfrequenz und reduziert so den Effektivstrom. Im Kurzschlußfall sperrt die Diode (4), und die Schutzfunktion des reversiblen Kurzschlußstrombegrenzers (3, 3') ist voll wirksam.

Läßt man einen oder mehrere Zwischenkreiskondensatoren (C1) ohne reversiblen Kurzschlußstrombegrenzer (3), während die übrigen Zwischenkreiskondensatoren (C2, C3) einen aufweisen, so erreicht man einen Schutz gegen Abschaltüberspannungen. Die Kurzschlußstromamplitude des Gesamtstromes im Gleichspannungszwischenkreis erhöht sich jedoch anteilmäßig.

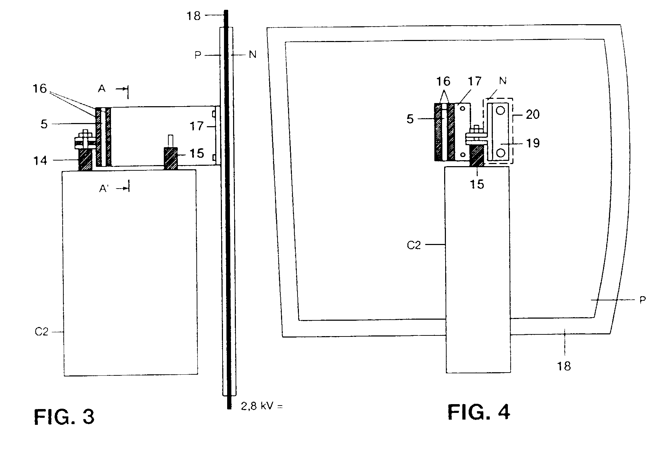

Die Fig. 3 und 4 zeigen in verschiedenen Ansichten ein konstruktives Ausführungsbeispiel für eine induktivitätsarme Anordnung des Kurzschlußschutzes bzw. des reversiblen Kurzschlußstrombegrenzers (3) mit einem Kaltleiter (5) an dem Zwischenkreiskondensator (C2). Hierbei ist der Kurzschlußschutz integraler Bestandteil der Zwischenkreisverschienung, indem er als elektrische Verbindung zwischen einer positiven Kondensatorklemme (14) und der positiven Polplatte (P) angeordnet ist. Der schichtförmig ausgebildete Kaltleiter (5) ist zwischen einem Kühlungs- und Kontaktierungselement (16) gelagert, bezüglich der Zeichenebene nach hinten abgewinkelt und mittels eines Kontaktierungselementes (17) an der positiven Polplatte (P) befestigt. Die positive Polplatte (P) ist durch eine Isolierschicht bzw. Isolierplatte (18) von der negativen Polplatte (N) getrennt und weist dieser gegenüber eine typische Gleichspannung von 2,8 kV auf.

Fig. 4 zeigt eine Schnittansicht längs einer Schnittebene A - A' in Fig. 3 mit Blickrichtung nach rechts. Eine negative Kondensatoranschlußklemme (15) des Kondensators (C2) ist mittels einer Kontaktierungsklemme (19) durch eine Öffnung bzw. ein Fenster (20) in der positiven Polplatte (P) und in der Isolierplatte (18) an der negativen Polplatte (N) kontaktiert, die in Fig. 4 nur durch das Fenster (20) erkennbar ist.

Ein Vorteil dieser Anordnung besteht in einem besonders platzsparenden und niederinduktiven Anschluß.

### BEZEICHNUNGSLISTE

- 1, 11: Netzstromrichter, 1. Stromrichter
- 2, 2': Gleichspannungszwischenkreise
- 3, 3': Kurzschlußstrombegrenzer
- 4: Diode
- 5: Kaltleiter
- 6: Varistor, Überspannungsableiter
- 7: ohmscher Widerstand
- 8, 12: Antriebsstromrichter, 2. Stromrichter
- 9: Thyristorbeschaltung von T1, T2
- 10: Wechselspannungsklemme von 8, 10
- 13, 13': Mittelpunktleiter
- 14: positive Kondensatoranschlußklemme
- 15: negative Kondensatoranschlußklemme
- 16: Kühlungs- und Kontaktierungselement von 5
- 17, 19: Kontaktierungselemente
- 18: Isolierschicht, Isolierplatte
- 20: Öffnung oder Fenster

- A - A': Schnittebene in Fig. 4
- C1, C2, C3: Zwischenkreiskondensatoren
- CF: Filterkondensator
- L, L1, L2: Drosseln, di/dt-Begrenzungsdrosseln
- LF: Filterdrossel
- N: negativer Pol, negative Polplatte
- P: positiver Pol, positive Polplatte
- T1, T2: GTO-Thyristoren

## Patentansprüche

1. Schutzschaltung für einen Stromkreis mit einer Kondensatorschaltung,
a) wobei ein reversibler Kurzschlußstrombegrenzer (3, 3') zu mindestens einem Kondensator (C2, C3) des Stromkreises in Reihe geschaltet ist und
b) der reversible Kurzschlußstrombegrenzer (3, 3') einen Kaltleiter (5) aufweist,
dadurch gekennzeichnet,
c) daß in einem Parallelzweig zu dem Kaltleiter (5) ein ohmscher Widerstand (7) geschaltet ist.

2. Schutzschaltung nach Anspruch 1, dadurch gekennzeichnet, daß der reversible Kurzschlußstrombegrenzer (3, 3') zu mehreren parallelgeschalteten Kondensatoren einer Kondensatorbank, jedoch nicht zu allen Kondensatoren dieser Kondensatorbank in Reihe geschaltet ist.

3. Schutzschaltung nach Anspruch 1 oder 2, dadurch gekennzeichnet, daß ein reversibler Kurzschlußstrombegrenzer (3') zu einem Mittelpunktleiter (13') eines Stromrichters (11, 12) mit 3Punkt-Schaltung in Reihe geschaltet ist.

4. Schutzschaltung nach einem der vorhergehenden Ansprüche, dadurch gekennzeichnet, daß in einem Parallelzweig zu dem Kaltleiter (5) ein Varistor (6) geschaltet ist.

5. Schutzschaltung nach Anspruch 4, dadurch gekennzeichnet, daß Kaltleiter (5) und Varistor (6) in einem Bauelement vereinigt sind.

6. Schutzschaltung nach einem der vorhergehenden Ansprüche, dadurch gekennzeichnet, daß Kaltleiter (5) und ohmscher Widerstand (7) in einem Bauelement vereinigt sind.

7. Schutzschaltung nach einem der vorhergehenden Ansprüche, dadurch gekennzeichnet, daß in einem Parallelzweig zu dem Kaltleiter (5) eine Diode (4) in Sperrichtung eines Kurzschlußpfades geschaltet ist.

8. Schutzschaltung nach einem der vorhergehenden Ansprüche, dadurch gekennzeichnet, daß der reversible Kurzschlußstrombegrenzer (5) schichtförmig ausgebildet und zwischen einem Kühlungs- und Kontaktierungselement (16) gelagert ist.

## Claims

1. Protection circuit for a circuit having a capacitor circuit,
a) a reversible short-circuit current limiter (3, 3') being connected in series with at least one capacitor (C2, C3) in the circuit and
b) the reversible short-circuit current limiter (3, 3') having a PTC thermistor (5),
characterised
c) in that a non-reactive resistor (7) is connected in parallel with the PTC thermistor (5).

2. Protection circuit according to Claim 1, characterized in that the reversible short-circuit current limiter (3, 3') is connected in series with a plurality of parallel-connected capacitors in a capacitor bank, but not in series with all the capacitors in this capacitor bank.

3. Protection circuit according to Claim 1 or 2, characterized in that a reversible short-circuit current limiter (3') is connected in series with a centre-point conductor (13') of a converter (11, 12) having a 3-point circuit.

4. Protection circuit according to one of the preceding claims, characterized in that a varistor (6) is connected in parallel with the PTC thermistor (5).

5. Protection circuit according to Claim 4, characterized in that the PTC thermistor (5) and the varistor (6) are combined in one component.

6. Protection circuit according to one of the preceding claims, characterized in that the PTC thermistor (5) and the non-reactive resistor (7) are combined in one component.

7. Protection circuit according to one of the preceding claims, characterized in that a diode (4), which is reverse-biased in the short-circuit direction, is connected in parallel with the PTC thermistor (5).

8. Protection circuit according to one of the preceding claims, characterized in that the reversible short-circuit current limiter (5) [sic] is designed in the form of layers and is mounted between a cooling and a contact-making element (16).

## Revendications

1. Circuit de protection pour un circuit électrique avec un circuit de condensateur,
a) dans lequel un limiteur réversible du courant de court-circuit (3, 3') est branché en série avec au moins un condensateur (C2, C3) du circuit du courant et
b) dans lequel le limiteur réversible du courant de court-circuit (3, 3') présente un conducteur froid (5),
caractérisé en ce que
c) une résistance ohmique (7) est branchée dans une branche parallèle au conducteur froid (5).

2. Circuit de protection selon la revendication 1, caractérisé en ce que le limiteur réversible du courant de court-circuit (3, 3') est branché en série avec plusieurs condensateurs branchés en parallèle d'un groupe de condensateurs mais toutefois pas avec tous les condensateurs de ce groupe de condensateurs.

3. Circuit de protection selon la revendication 1 ou 2, caractérisé en ce qu'un le limiteur réversible du courant de court-circuit (3') est branché en série avec un conducteur du point central (13') d'un redresseur de courant (11, 12) d'un circuit à 3 points.

4. Circuit de protection selon l'une quelconque des revendications précédentes, caractérisé en ce qu'une varistance (6) est branchée dans une branche parallèle au conducteur froid (5).

5. Circuit de protection selon la revendication 4, caractérisé en ce que le conducteur froid (5) et la varistance (6) sont réunis dans un composant.

6. Circuit de protection selon l'une quelconque des revendications précédentes, caractérisé en ce le conducteur froid (5) et la résistance ohmique (7) sont réunis dans un composant.

7. Circuit de protection selon l'une quelconque des revendications précédentes, caractérisé en ce qu'une diode (4) est branchée dans le sens du blocage d'un passage du court circuit dans une branche parallèle au conducteur froid (5).

8. Circuit de protection selon l'une quelconque des revendications précédentes, caractérisé en ce que le limiteur réversible du courant de court-circuit (5) est réalisé sous forme de couche et est situé entre un élément de refroidissement et un élément de contact (16).
